# EUROPEAN PATENT APPLICATION

(11) **EP 4 778 855 A1**
(43) Date of publication of application: **22.07.2026**
(21) Application number: 26152582.8
(22) Date of filing: 19.01.2026
(51) Int. Cl.: B65D 85/804

(54) **A BEVERAGE CAPSULE AND A METHOD FOR FORMING THE SAME**

(30) Priority: 20.01.2025 EP 25152937
(71) Applicant: Rubinstein, David, 2000 Antwerpen (BE)
(72) Inventor: CECCARELLI, Luigi, Vrsar (HR)
(74) Representative: Gevers Patents

(57) **Abstract**

A beverage capsule (10) for use in a beverage preparation machine to prepare a beverage by passing a fluid therethrough. The beverage capsule comprises: a cup-shaped body (12) having a base (14) and a sidewall (16); a lid (22) sealed to the cup-shaped body; and a punctured filter plate (20) positioned inside the cup-shaped body and dividing the interior volume into a first compartment for holding beverage ingredients (24) and a second compartment. The punctured filter plate is located at a distance from the base which is larger than a piercing height of a draining member of the beverage preparation machine. The cup-shaped body, the lid and the punctured filter plate are made of a material comprising metal. The punctured filter plate is held in place by two sets of crimps provided in the sidewall and located on opposite sides adjacent the punctured filter plate.

## Description

### Technical field

The present invention relates to a beverage capsule for use in a beverage preparation system to prepare a beverage by passing a fluid through the beverage capsule. The present invention further relates to a method for forming the beverage capsule.

### Background art

A known beverage capsule comprises: a cup-shaped body comprising a base and a sidewall contiguous with the base, wherein the base is configured to be pierced by a draining member of the beverage preparation machine to allow draining a beverage from the beverage capsule; a lid which is typically sealed to the cup-shaped body, the lid and cup-shaped body enclosing an interior volume, wherein the lid is configured to be pierced by an injection member of the beverage preparation machine to inject a fluid into the beverage capsule; and a punctured filter plate positioned inside the cup-shaped body and dividing the interior volume into a first compartment delimited in part by the lid and configured for holding one or more beverage ingredients and a second compartment delimited in part by the base, wherein the punctured filter plate is located at a distance from said base which is equal or larger than a piercing height of the draining member of the beverage preparation machine and wherein said beverage is able to pass through the punctured filter plate.

Such a beverage capsule is known from WO 2013/39585 A1 where a filter paper is attached to the plastic punctured filter plate. The paper filter in the capsule disclosed in WO 2013/39585 A1 is configured to filter the beverage made by passing the water through the beverage ingredients contained in the capsule. In other words, the filter paper retains at least most of the beverage ingredients inside the capsule which, if these were to come out together with the beverage, would reduce the quality of the latter. The role of the punctured filter plate is avoiding that the filter paper gets damaged by the ingredients and/or the piercing member of the beverage preparation machine.

In the prior art various beverage ingredients are known. These may be divided roughly into two classes, namely extraction or infusion ingredients and dissolving ingredients. The beverage capsule according to the present invention may be applied in both cases, i.e. either in the case in which the capsule is of the type which contains beverage ingredients intended to allow the beverage to be made by extraction or infusion (such as roasted ground coffee or tea leaves as with the capsule disclosed in WO 2013/39585 A1) and in the case in which the capsule is of the type which contains beverage ingredients intended to allow the beverage to be made following complete or partial dissolving of the beverage ingredients when the water passes through it (for example milk, chocolate, powdered tea, instant drink, etc.).

The known beverage capsules are used in a beverage preparation system where fluid (usually water) is supplied directly into the capsule. More specifically, the capsule is inserted in an openable and closable chamber, defined inside the beverage preparation system. When the capsule is inside the closed chamber, an injection member of the beverage preparation machine pierces the lid and water (usually hot and pressurised as required) is injected into the capsule, in order to obtain the beverage following the interaction of the water with the beverage ingredients (e.g. extraction, infusion, or partial or whole dissolution). Finally, the beverage is released from the capsule by a draining member which pierces the base allowing the beverage to flow along an outflow path of the beverage preparation system.

A known issue with the beverage capsules is their recyclability after having been used. The capsules are often formed from a mix of materials that are not easily distributed to specific recycling streams. For example, Keurig K-Cup^{™} capsules have: a body that is formed from a multilayered material that includes a polyethylene or polypropylene outer layer, an ethylene vinyl alcohol copolymer (EVOH) barrier layer and a polyethylene sealing layer; a filter that is formed primarily out of paper; and a cover that is formed from a multilayered material that includes an aluminium foil outer layer, an EVOH barrier layer and a polyethylene sealing layer. Moreover, the filter is usually attached to and irremovable from the capsule body. As such, even if the lid is removed, which in itself is already difficult since it is often welded to the cup-shaped body, it is difficult to remove the filter. Also, because the filter is not necessarily closed around the beverage ingredients, once the lid is removed the beverage ingredients can spill out of the capsule and onto the floor or machine.

The issue of recyclability has already been addressed in the prior art, e.g. US 2017/283163 A1 and WO 2019/204916 A1. WO 2019/204916 A1 proposes forming the entire capsule (i.e. body, filter and cover) from a single polymeric material thus allowing recycling in a single material stream. US 2017/283163 A1 proposes an aluminum capsule with a base having an elevated part to support the paper filter to avoid the use of a plastic punctured filter plate.

In the context of these problems, the current applicant has already filed a European patent application under no. 23186712.8 which is not yet published. This patent application discloses a beverage capsule according to the preamble of claim 1 in which the cup-shaped body, the lid and the punctured filter plate are all made of a material comprising metal. The use of metal aids in preserving the beverage ingredients which are present within the interior volume. More specifically, a known downside of polymeric materials (as in the capsule disclosed in WO 2019/204916 A1) is a low preservation of food ingredients inside the capsule, this is particularly caused by an insufficient oxygen tightness. The use of metal overcomes this issue.

Unpublished European patent application no. 23186712.8 further discloses that the punctured filter plate can perform the role of a conventional filter paper. As such, there is no longer any need to include a filter paper inside the capsule. This improves the recyclability of the capsule since there is no longer any need to separate the filter paper from the remainder of the capsule as with the capsuled disclosed in US 2017/283163 A1.

### Disclosure of the invention

The present inventors realized that the punctured filter plate disclosed European patent application no. 23186712.8 has to be secured to the sidewall in an easy manner with as little effort as possible. In European patent application no. 23186712.8, this securing is achieved by a stepped region in the sidewall to which the punctured filter plate is welded. Alternatively, the stepped region was used in conjunction with inward protrusions or without any protrusions. In any case, the capsule design required the stepped region which increased the manufacturing complexity of the cup-shaped body.

It is an object of the present invention to provide a beverage capsule which has a reduced design complexity.

This object is achieved according to the present invention in that the sidewall is provided with a first set of crimps located adjacent the punctured filter plate with the punctured filter plate being held in place at least in part by the crimps.

Crimps are generally understood by the skilled person as local deformations of the sidewall that extend inwardly. Such crimps can be readily provided in most ductile metal materials by the known "crimping" metal working process.

The use of crimps to secure the punctured filter plate is applicable for any kind of sidewall shape. In particular, the use of crimps is applicable also in a continuous no-stepped sidewall. There are thus less design requirements on the capsule sidewall as there is no need to design the sidewall to support the punctured filter plate.

An embodiment of the present invention is characterized in that the beverage capsule further comprises the one or more beverage ingredients, which ingredients are either extraction/infusion based ingredients (e.g. roasted ground coffee, tea leaves, etc.) or dissolution based (e.g. powder materials such as milk powder, chocolate powder, powdered tea, powdered soup, instant drink, etc.). Preferably, when the ingredients are extraction/infusion based ingredients, the beverage ingredients have a particle size distribution determined using optical microscopy according to ISO 13320:2020, wherein at least 90 volume%, and in particular at least 95 volume%, of the one or more beverage ingredients have a particle size of at least 30 µm, in particular at least 40 µm and more particularly at least 50 µm. The beverage capsule according to the present invention is thus usable for preparing a variety of beverages.

An embodiment of the present invention is characterized in that, when the ingredients are extraction/infusion based ingredients, the punctured filter plate comprises openings having a size so as to prevent at least 90 volume%, in particular at least 95 volume%, and specifically at least 99 volume%, of the one or more beverage ingredients from passing therethrough. This avoids that too much of the ingredients would pass into the beverage which could otherwise negatively affect beverage quality.

An embodiment of the present invention is characterized in that, when the ingredients are extraction/infusion based ingredients, the punctured filter plate comprises openings having a smallest dimension which is at most 500 µm, in particular at most 300 µm, more in particular at most 200 µm, and most in particular at most 100 µm. Advantageously, the smallest dimension is comprised between 50 µm and 100 µm, such as 55 µm, 60 µm, 65 µm, 70 µm, 75 µm, 80 µm, 85 µm, 90 µm or 95 µm. The smallest dimension may be the diameter in case the openings are substantially circular or the width in case the openings are formed as oblong slits. Such a smallest dimension has been found to retain conventional roasted ground coffee ingredients to a sufficient extent so as to avoid these from lowering the beverage quality.

An embodiment of the present invention is characterized in that the punctured filter plate comprises openings which are substantially uniformly distributed across the plate. However, alternative distributions with a concentration in the center or on the outer part are also possible. The distribution is mainly determined to achieve a desired contact time between the water and the beverage ingredients, which desired contact time is dependent on the type of beverage to prepare.

An embodiment of the present invention is characterized in that the cup-shaped body the lid and the punctured filter plate are all made of a metal, preferably a food-grade metal, such as aluminium or an aluminium alloy. Ideally, all parts are made of the same metal to optimize recyclability of the capsule.

An embodiment of the present invention is characterized in that the cup-shaped body and the lid are both made of a metal-based laminate material comprising at least one layer of metal, the metal layer preferably comprising a food-grade metal, such as an aluminium or an aluminium alloy, wherein the punctured filter plate is made of a metal, preferably a food-grade metal, such as aluminium or an aluminium alloy. Ideally, the metal used for the punctured filter plate is the same as that used in the metal layer of the metal-based laminate. The use of the same metal in all parts optimizes recyclability of the capsule.

The aluminium or aluminium alloy is preferably annealed aluminium or aluminium alloy and particularly being a soft annealed aluminium or aluminium alloy. The aluminium alloy may, for example, be of grade 3005, 3104, 3105, 3175, 8011 or 8079. The skilled person is familiar with these materials and their various advantages, in particular in the context of food-grade materials.

The metal-based laminate may comprise one or more lacquer layers (i.e. a lacquer-metal laminate). For example, a heat seal lacquer, in particular a vinyl heat seal lacquer, or an epoxy stove lacquer, in particular a colored or transparent epoxy stove lacquer. These lacquers can influence the visual look of the cup-shaped body exterior and may also be beneficial for, in a later stage of production, applying a lid to the cup-shaped body to seal the capsule. Moreover, the presence of one or two lacquer layers has no negative impact on the capsule recyclability as the capsule is mainly formed from a metal material.

The metal-based laminate may comprise one or more polymer layers (i.e. a polymer-metal laminate). The one or more polymer layers may comprise a single layer of a single polymer material or multiple layers of different polymer materials. Where multiple layers of different polymer materials are used, each layer may be applied separately when forming the sheet of material that is usually the basis for forming the cup-shaped body. However, it is preferred that the multiple layers of different polymer materials are first made up into a multilayer laminated polymer film which can then be laminated onto the metal layer (e.g. the aluminium or aluminium alloy layer) by a suitable process, for example adhesive lamination. The polymer materials of the one or more polymer layers may comprise materials selected from the group consisting of homopolymers, copolymers and mixtures thereof. A homopolymer refers to a polymer produced by the polymerization of a single monomer. A copolymer refers to a polymer produced by the polymerization of two or more monomers. Suitable homopolymers include polyvinyl chloride (PVC), polypropylene (PP), low density polyethylene (LDPE), medium density polyethylene (MDPE), high density polyethylene (HDPE), polytetrafluoroethylene (PTFE), polyethylene terephthalate (PET), polychloroprene, polyisobutylene, and polyamides. Suitable copolymers include fluorinated ethylene propylene (FEP), ethylene propylene diene monomer (EPDM), polyamides, thermoplastic copolyesters (TPC) and olefin block copolymers (OBC). These copolymers are preferably alternating copolymers or block copolymers. An alternating copolymer refers to a copolymer with regular alternating monomer units. A block copolymer refers to a copolymer comprising two or more homopolymer subunits linked by covalent bonds.

The use of an all-metal capsule or a lacquer-metal based laminate is preferred for recycling purposes as opposed to a polymer-metal based laminate.

An embodiment of the present invention is characterized in that the cup-shaped body is integrally formed (e.g. by drawing or deep drawing operations) from a sheet of material. The sheet may have a thickness between 50 and 500 microns. The thickness preferably being at least 60 microns, more preferably at least 70 microns and most preferably at least 80 microns. The thickness preferably being at most 400 microns, more preferably at most 300 microns, even more preferably at most 200 microns, still more preferably at most 150 microns, and most preferably at most 120 microns. The sheet advantageously has a thickness of about 80 to 100 microns.

An embodiment of the present invention is characterized in that each set of crimps is substantially uniformly spread along a circumference of the sidewall. This avoids tilting of the punctured filter plate which could occur when the crimps are located mostly or exclusively on one part of the sidewall.

An embodiment of the present invention is characterized in that the first set of crimps and the second set of crimps are interleaved in a circumferential direction of the sidewall. This reduces strain on the material of the capsule sidewall which would occur when two crimps would be positioned directly above one another since the same longitudinally extending wall section would be deformed twice.

An embodiment of the present invention is characterized in that each crimp has a length between 1 mm and 8 mm in a circumferential direction of the sidewall with the length being particularly at least 2 mm and more particularly at least 2,5 mm and with the length being particularly at most 5 mm and more particularly at most 4 mm. Such dimensions have been found to offer satisfactory support for the punctured filter plate.

An embodiment of the present invention is characterized in that each crimp has a height between 0,2 mm and 5 mm in a longitudinal direction of the capsule with the height being particularly at least 0,5 mm and more particularly at least 0,8 mm and with the height being particularly at most 3 mm and more particularly at most 2 mm. Such dimensions have been found to offer satisfactory support for the punctured filter plate.

An embodiment of the present invention is characterized in that each set comprises between 2 and 20 crimps and particularly at least 4 crimps or at least 5 crimps and particularly at most 12 crimps or at most 8 crimps. Such a number of crimps has been found to offer satisfactory support for the punctured filter plate

An embodiment of the present invention is characterized in that each crimp extends over an angle in a circumferential direction of the sidewall of between 5° and 25° degrees, the angle being particularly at least 8° and more particularly at least 10° and with the angle being particularly at most 20° and more particularly at most 15°. Such dimensions have been found to offer satisfactory support for the punctured filter plate.

An embodiment of the present invention is characterized in that the sidewall is provided with a second set of crimps which sets are located on opposite sides adjacent the punctured filter plate with the punctured filter plate being held in place by the crimps.

The use of two sets of crimps allows to position and hold a filter plate in a capsule with a continuous no-stepped sidewall. There are thus less design requirements on the capsule sidewall as there is no need to design the sidewall to support the punctured filter plate.

An embodiment of the present invention is characterized in that the sidewall comprises a stepped region, the punctured filter plate engaging the stepped region with the first set of crimps being located on the other side of the punctured filter plate than the stepped region.

The use of a stepped region and crimps allows to position and hold a filter plate in a more conventional capsule design where a stepped region is commonly provided.

An embodiment of the present invention is characterized in that said distance between the punctured filter plate and the base is at least 5 mm and preferably at least 8 mm or more. Such a distance has been found to be sufficiently far away to allow the draining member of the beverage preparation machine to sufficiently pierce the base to allow a satisfactory draining of the beverage from the capsule without contacting and/or damaging the punctured filter plate.

An embodiment of the present invention is characterized in that the beverage capsule does not contain a filter paper.

An embodiment of the present invention is characterized in that the beverage capsule further comprises a filter bag. Whilst this may reduce the recyclability of the capsule, it offers a degree of freedom in capsule design and may more easily retain certain kinds of ingredients than the punctured filter plate.

An embodiment of the present invention is characterized in that the sidewall comprises a stepped region near the lid, which stepped region is configured for attaching a filter bag thereto.

A stepped region is a well-known and reliable aid in fixing a filter bag to a cup-shaped body.

An embodiment of the present invention is characterized in that the beverage capsule comprises an annular rim contiguous with the sidewall, the lid being sealed to the annular rim. The provision of an annular rim provides a surface on which the lid can be easily sealed.

An embodiment of the present invention is characterized in that, the capsule is a single-use, disposable element.

The object according to the present invention is also achieved with a method for manufacturing a beverage capsule as described above, the method comprising: providing the punctured filter plate and a cup-shaped body preform, which preform comprises the base and a sidewall preform; crimping the sidewall preform to obtain the first set of crimps; placing the punctured filter plate in the cup-shaped body so that it rests on the first set of crimps; crimping the sidewall preform to obtain the second set of crimps thereby holding the punctured filter plate in place and forming the sidewall; positioning the one or more beverage ingredients in the first compartment; and sealing the lid to the cup-shaped body thereby closing the first compartment.

The object according to the present invention is also achieved with a method for manufacturing a beverage capsule as described above, the method comprising: providing the punctured filter plate and a cup-shaped body preform, which preform comprises the base and a sidewall preform; crimping the sidewall to obtain the first set of crimps and the second set of crimps and forming the sidewall; click fitting the punctured filter plate in between the sets of crimps; positioning the one or more beverage ingredients in the first compartment; and sealing the lid to the cup-shaped body thereby closing the first compartment.

The object according to the present invention is also achieved with a method for manufacturing a beverage capsule as described above, the method comprising: providing the punctured filter plate and a cup-shaped body preform, which preform comprises the base and a sidewall preform, which sidewall preform comprises a stepped region; placing the punctured filter plate in the cup-shaped body so that it rests on the stepped region; crimping the sidewall preform to obtain the first set of crimps thereby holding the punctured filter plate in place and forming the sidewall; positioning the one or more beverage ingredients in the first compartment; and sealing the lid to the cup-shaped body thereby closing the first compartment.

These methods result in the beverage capsule described above and thus achieve the same advantages.

The main difference between the first two methods is the ordering of steps. In the first method, only one set of crimps is made after which the punctured filter plate is placed. This plate is then secured by making the second set of crimps. In the second method, both sets of crimps are made after which the punctured filter plate is click fitted between the crimps.

In general, the second method is preferred as this requires only one stage of crimping. However, depending on the material choice and/or thicknesses the first method may be preferred, e.g. in case the punctured filter plate is relatively thick and would deform the crimps instead of click fitting between them.

The third method may be preferred as this results in a conventional capsule design with a stepped region.

### Brief description of the drawings

The invention will be further explained by means of the following description and the appended figures.
Figure 1 shows an exploded view of a beverage capsule according to the present invention.
Figure 2 shows a perspective view of a beverage capsule according to the present invention.
Figure 3 shows a side view of the beverage capsule of figure 2.
Figure 4 shows a cross-sectional view of the beverage capsule of figure 2.
Figures 5 and 6 show details of figure 4.
Figure 7 shows a punctured filter plate for use in a beverage capsule according to the present invention.
Figure 8 shows a cross-sectional view of the beverage capsule of figure 1.
Figure 9 shows a cross-sectional view of an alternative beverage capsule according to the present invention.

### Description of the invention

The present invention will be described below on the basis of specific embodiments and with reference to particular drawings, but the invention is not limited to these and is solely defined by the claims. The drawings shown here are solely schematic views and are not restrictive. In the drawings, the dimensions of certain components may be shown enlarged, meaning that the components in question are not shown to scale, but solely for the purpose of illustration. The dimensions and the relative dimensions do not necessarily correspond with the actual practical implementations of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes. The terms so used are interchangeable under appropriate circumstances and the embodiments of the invention described herein can operate in other orientations than described or illustrated herein.

Furthermore, the various embodiments, although referred to as "preferred" are to be construed as exemplary manners in which the invention may be implemented rather than as limiting the scope of the invention.

The term "comprising" and derivations thereof, as used in the claims, must not be interpreted as being restricted to the means that are indicated thereafter each time; the term does not exclude other elements or steps. The terms must be interpreted as a specification of the indicated characteristics, integers, steps, or components to which reference is made, but without the presence or addition of one or more additional characteristics, integers, steps, components, or groups thereof being excluded. The scope of an expression such as "a device comprising means A and B" is in this case also not exclusively restricted to devices that purely consist of components A and B. In contrast, what is meant is that, as regards the present invention, the only relevant components are A and B.

The term "substantially" comprises variations of +/- 10% or less, preferably +/-5% or less, more preferably +/-1% or less, and more preferably still +/-0.1% or less, of the specified state, in so far as the variations are applicable for operation in the present invention. The term "substantially A" should be understood to also comprise "A".

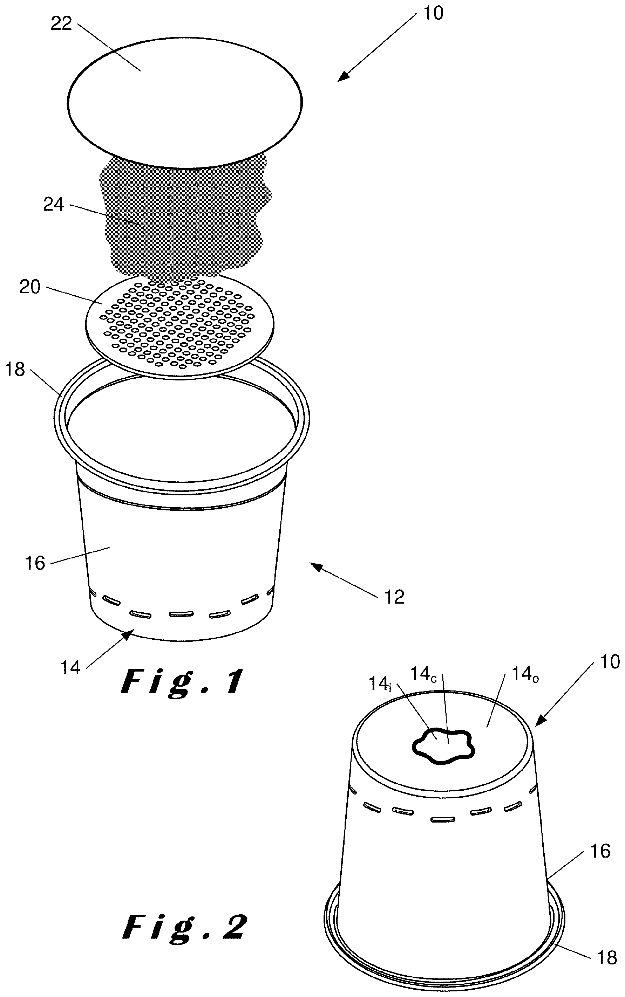

Figure 1 shows an exploded view of a beverage capsule 10 according to the present invention. The capsule 10 comprises a cup-shaped body 12 having a base 14, a sidewall 16 which is contiguous with the base 14 and an annular rim 18 which is contiguous with the sidewall 16. The capsule 10 further comprises a punctured filter plate 20 and a lid 22 sealed to the sidewall 16, in particular to the annular rim 18. Beverage ingredients 24 are also schematically shown in figure 1.

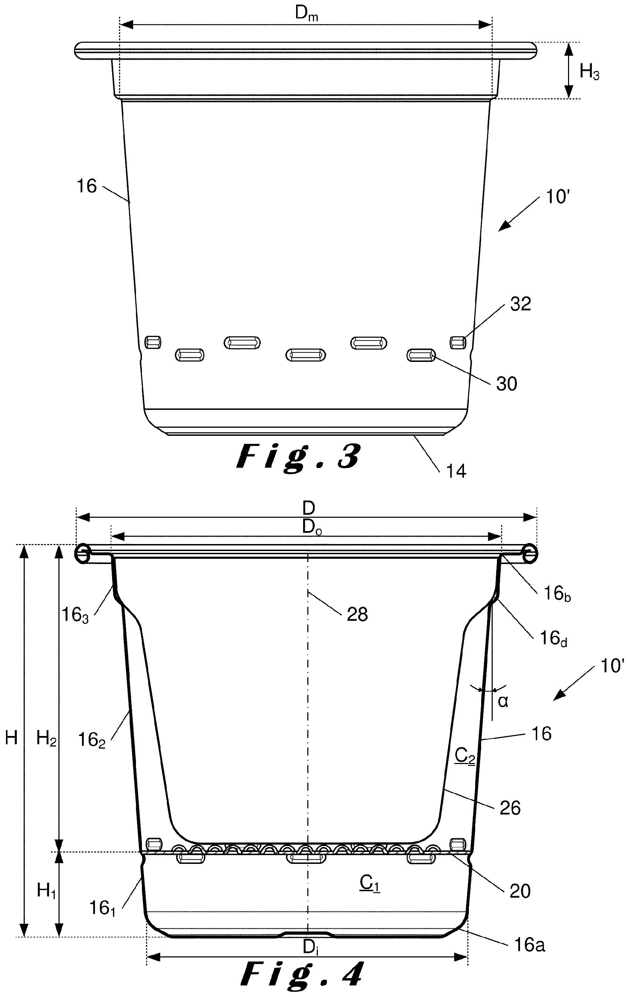

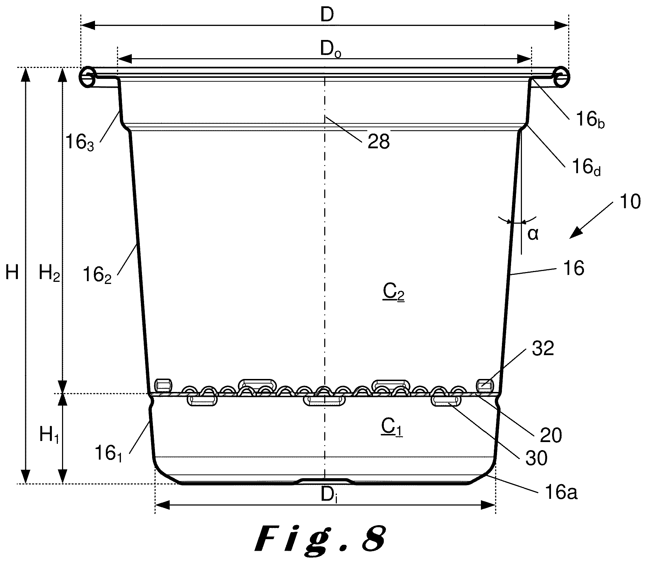

As indicated in figures 4 and 8, the cup-shaped body 12 generally has a height H comprised between 25 and 65 mm. The height H is preferably at least 35 mm, more preferably at least 40 mm, and most preferably at least 43 mm. The height H is preferably at most 55 mm, more preferably at most 50 mm, and most preferably at most 48 mm. In the illustrated embodiment, the height H is about 46 mm.

The cup-shaped body 12 generally has an outer diameter D comprised between 30 and 70 mm. The outer diameter D is preferably at least 40 mm, more preferably at least 45 mm, and most preferably at least 50 mm. The outer diameter D is preferably at most 60 mm, more preferably at most 57 mm, and most preferably at most 55 mm. In the illustrated embodiment, the outer diameter D is about 54 mm.

The sidewall 16 has an inner diameter Dᵢ measured at the end 16a contiguous with the base 14 comprised between 15 and 55 mm. The inner diameter Dᵢ is preferably at least 25 mm, more preferably at least 30 mm, and most preferably at least 33 mm. The inner diameter Dᵢ is preferably at most 45 mm, more preferably at most 40 mm, and most preferably at most 37 mm. In the illustrated embodiment, the outer diameter Dᵢ is about 35 mm.

The sidewall 16 has an outer diameter Dₒ measured at the end 16b contiguous with the annular rim 18 comprised between 25 and 65 mm. The outer diameter Dₒ is preferably at least 35 mm, more preferably at least 40 mm, and most preferably at least 43 mm. The outer diameter Dₒ is preferably at most 55 mm, more preferably at most 50 mm, and most preferably at most 47 mm. In the illustrated embodiment, the outer diameter Dₒ is about 45 mm.

The dimensions H, D, Dᵢ and Dₒ are mainly determined in function of the beverage preparation machine, in particular of the closed chamber inside the beverage preparation machine.

According to the present invention, the sidewall 16 is provided with first set of crimps 30 and a second set of crimps 32. The punctured filter plate 20 is secured between these sets of crimps 30, 32 as best shown in figures 4 and 8. The punctured filter plate 20 divides the sidewall 14 into a first section 16₁ extending between the base 14 up to and including the first crimps 30 and a second section 16₂ extending between the annular rim 18 up to and including the second crimps 32.

The first sidewall section 16₁ has a height H₁ comprised between 3 and 20 mm. The height H₁ is preferably at least 5 mm, more preferably at least 8 mm, and most preferably at least 9 mm. The height H₁ is preferably at most 15 mm, more preferably at most 12 mm, and most preferably at most 11 mm. In the illustrated embodiment, the height H₁ is about 10 mm.

The second sidewall section 16₂ has a height H₂ comprised between 20 and 50 mm. The height H₂ is preferably at least 25 mm, more preferably at least 30 mm, and most preferably at least 33 mm. The height H₂ is preferably at most 45 mm, more preferably at most 40 mm, and most preferably at most 37 mm. In the illustrated embodiment, the height H₂ is about 35 mm.

The sidewall 16 has an inclination angle a with respect to the central axis 28 of the capsule 10 comprised between 0° and 10°. The inclination angle α₁ is preferably at least 1° and more preferably at least 2°. The inclination angle α₁ is preferably at most 8°, more preferably at most 6°, and most preferably at most 4° mm. In the illustrated embodiment, the inclination angle α₁ is about 3°.

The inclination angle α is determined in order to maximize the volume inside the cup-shaped body whilst allowing the cup-shaped bodies to be stackable before assembly.

The punctured filter plate 20 divides the internal capsule volume into a first compartment C1 and a second compartment C2. The first compartment C1 is normally empty and the second compartment C2 is filled with beverage ingredients 24. The first compartment C1 is delimited by the base 14, the first sidewall section 16₁ and the punctured filter plate 20. The second compartment C2 is delimited by the lid 22, the second sidewall section 16₂ and the punctured filter plate 20.

As described above, the beverage ingredients 24 are either extraction/infusion based ingredients (e.g. roasted ground coffee, tea leaves, etc.) or dissolution based (e.g. powder materials such as milk powder, chocolate powder, powdered tea, powdered soup, instant drink, etc.). Preferably, when the ingredients are extraction/infusion based ingredients, the beverage ingredients have a particle size distribution determined using optical microscopy according to ISO 13320:2020, wherein at least 90 volume%, and in particular at least 95 volume%, of the one or more beverage ingredients have a particle size of at least 30 µm , in particular at least 40 µm and more particularly at least 50 µm.

The second compartment C2 has a volume comprised between 30 and 70 mml. The second compartment volume is preferably at least 35 ml, more preferably at least 40 ml, and most preferably at least 45 ml. The second compartment volume is preferably at most 60 ml, more preferably at most 55 ml, and most preferably at most 52 ml. In the illustrated embodiment, the second compartment volume is about 48 or 49 ml.

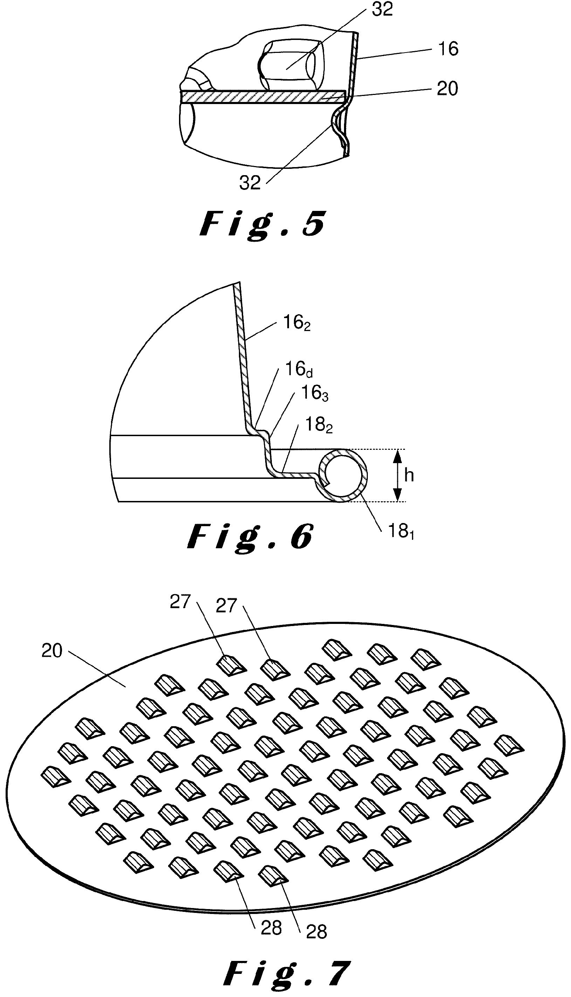

As shown in figure 6, the annular rim 18 has a flat section 18₂ and a rolled-over rim potion 18₁. The lid 22 is normally sealed to the flat section 18₂. The use of a rolled-over rim portion 18₁ is a well-known technique for forming the free end of the annular rim when using a metal or metal-based laminate material to form the cup-shaped body 12. The rolled-over rim 18₁ has a height h comprised between 0,8 and 2,0 mm. The height h is preferably at least 1,0 mm, more preferably at least 1,2 mm, and most preferably at least 1,25 mm. The height h is preferably at most 1,6 mm, more preferably at most 1,4 mm, and most preferably at most 1,35 mm. In the illustrated embodiment, the height h is about 1,25 mm.

Naturally, other shapes are possible for the rolled-over rim portion, e.g. an elliptic shape which increases the surface area of the flat section 18₂ useable for sealing the lid 22. Furthermore, the orientation of the roll-over rim portion may also be clockwise instead of counter-clockwise in the illustrated embodiment.

Figure 2 further illustrates that the base 14 is provided with a ridged contour 14c which divides the base 14 into an inner region 14ᵢ and an outer region 14ₒ. Typically, the outer region 14ₒ is punctured by a piercing member of the beverage preparation machine to drain a beverage from the capsule 10. The lid 22 is normally pierced by a piercing member of the beverage preparation machine to inject a fluid (typically water) into the capsule to create a beverage through interaction with the beverage ingredients. The operation of the beverage capsule 10 in a beverage preparation machine will not be described further and is considered known to the skilled person.

The punctured filter plate 20 is provided with openings (schematically illustrated in figure 1) to allow the prepared beverage to pass therethrough. As described above, when the ingredients are extraction/infusion based ingredients, the openings in the punctured filter plate 20 have a size so as to prevent at least 90 volume%, in particular at least 95 volume%, and specifically at least 99 volume%, of the beverage ingredients 24 from passing therethrough.

Depending on the type of beverage ingredients 24 (e.g. roasted ground coffee), the openings in the punctured filter plate 20 have a smallest dimension which is at most 500 µm, in particular at most 300 µm, more in particular at most 200 µm, and most in particular at most 100 µm. The smallest dimension may be the diameter in case the openings are substantially circular (as in the illustrated embodiment) or the width in case the openings are formed as oblong slits as in the embodiment of the punctured filter plated 20 illustrated in figure 7.

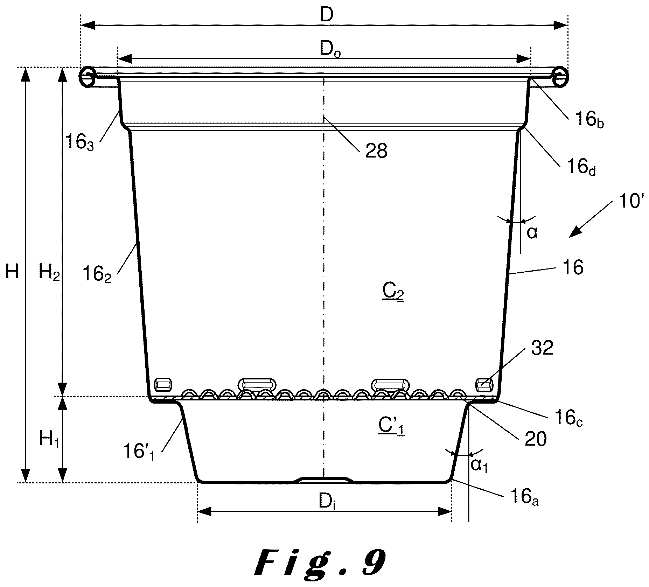

A method to manufacture the punctured filter plated 20 shown in figure 7 is disclosed in unpublished European patent application 23208128.1 which is incorporated herein by reference. In the method, a tool is used to create a depression 27 figure 9B. If the tool is pushed deep enough into the foil (e.g. by deep drawing), the elongation of the foil will exceed the elongation at break properties of the material (e.g. aluminium) thus causing a tear 28 to appear. The depressions in figure 7 are formed by a tool having an elongated head. This causes a valley like depression 27 to be formed with eventual tearing 28 at the opposing ends of the valley.

In the illustrated embodiment, the openings are substantially uniformly distributed across the punctured filter plate 20 and are substantially the same. However, this is not necessary. The distribution of the openings may vary as described above. Moreover, the openings may have varying shapes and/or size.

The cup-shaped body 12 is usually obtained by deforming a flat sheet of material into the cup-shape. This may be done by deep drawing in a one-stage or multiple-stage process.

According to the present invention, the cup 12, the punctured filter plate 20 and the lid 22 all comprise metal and ideally a same metal for improving recyclability.

In the illustrated embodiment, the cup 12 and the lid 22 are both made either solely from a metal or a metal-based laminate having a metal layer with a lacquer layer on one or both sides. Possible and preferred metals have been described above and will not be repeated. The punctured filter plate 20 in the illustrated embodiment is made solely from a metal and ideally the same metal as used for the cup 12 and the lid 22.

In another embodiment, the cup 12 and the lid 22 are both made from a same metal-based polymer laminate. In this embodiment, the punctured filter plate 20 is preferably made solely from a metal and ideally the same metal as used for the metal layer in the cup 12 and the lid 22. Possible and preferred metals and polymers have been described above and will not be repeated.

In yet another embodiment, the cup 12 is made from a metal or a metal-based laminate having a metal layer with a lacquer layer on one or both sides; the lid 22 is made from a metal-based polymer laminate and the punctured filter plate 20 is preferably made solely from a metal. Ideally the metal is the same for each component. Possible and preferred metals and polymers have been described above and will not be repeated.

In the illustrated embodiment, the shape of the sidewall 16 in capsule 10 comprises a stepped region 16_{d} thus dividing the sidewall 16 in three sections 16₁, 16₂, 16₃.

At the inner part of ridged section 16d, the sidewall 16 has a diameter Dₘ comprised between 20 and 60 mm. The diameter Dₘ is preferably at least 30 mm, more preferably at least 35 mm, and most preferably at least 38 mm. The diameter Dₘ is preferably at most 50 mm, more preferably at most 45 mm, and most preferably at most 42 mm. In the illustrated embodiment, the diameter Dₘ is about 40 mm.

The ridged zoned 16d is separated from the free edge of the rolled over rim 18₁ by a height H₃ generally comprised between 1 and 20 mm. The height H₃ is preferably at least 2 mm, more preferably at least 3 mm, and most preferably at least 94 mm. The height H₃ is preferably at most 15 mm, more preferably at most 10 mm, and most preferably at most 7 mm. In the illustrated embodiment, the height H₃ is about 5 mm.

The main reason for the presence of the ridge 16d is to allow fastening a filter bag 26 thereto. This may be done in replacement to the punctured filter plate 20 or in addition thereto.

Filter bags 26 are known in the art and may be made in various shapes, sizes, materials, etc. Commonly these are biodegradable, e.g. from paper- or cellulose based materials or from biodegradable polymer materials (e.g. polyactic acid (PLA), polybutylene succinate (PBS), poly-3-hydroxybutyrate-co-3-hydroxyhexanoate (PHBH), polyhydroxyalkanoate (PHA), etc.) or from non-biodegradable materials (e.g. polypropylene (PP)). Furthermore, also other materials (e.g. metal, nylon, etc.) may be used.

In order to more easily seal the filter bag 26 to the cup-shaped body, it is beneficial to provide a lacquer layer on the inside of the cup-shaped body. More specifically, the lacquer is preferably provided on the inside of ridged step 16d. The lacquer is usually dependent on the material of the filter bag 26 and should be compatible therewith in the sense that it allows bonding of the filter bag 26 to the ridged step 16d. To that end, the lacquer may be polyvinchloride (PVC) based, although non-PVC-based lacquers are also known, for example based on polypropylene (PP). The bonding may be done using ultrasonic welding at a certain temperature, pressure, contact time as understood by the skilled person. The lacquer may be applied in various thicknesses and/or weights with applications between 3-15 g/m² being preferred and between 6-12 g/m² being more preferred.

The main advantage of the cup-shaped body shown in figure 1 is that a same body may be used to manufacture two different capsules 10, 10'. More specifically, as shown in figure 4, the step 16d may be used to fix a filter bag 26 to the cup-shaped body in combination with the punctured filter plate 20 held by the crimps 30, 32 to form a capsule 10'. Whereas, as shown in figure 8, the filter bag can be absent with only the punctured filter plate 20 held by the crimps 30, 32 to form a capsule 10. This is very advantageous from a manufacturing process point of view as there is no need for a double stock of cup-shaped bodies depending on the intended application (i.e. with or without paper filter bag).

In the illustrated embodiment, as shown in figure 3, each set of crimps 30, 32 is substantially uniformly spread along a circumference of the sidewall 16. Each set comprises 6 crimps. Each crimp has a length of about 3 mm and a height of about 1 mm. However, as described above, other dimensions and number of crimps are possible.

In general, according to the present invention, the crimps 30, 32 are so formed so as to retain the punctured filter plate 20. Thus any such inwardly extending set of protrusions formed by crimping which allow to secure the punctured filter plate 20 should be considered as falling within the scope of the invention as defined by the claims.

As described above, the capsule 10 may be assembled in two different ways. In a first way, only the first set of crimps 30 is made. Afterwards, the punctured filter plate 20 is positioned resting on the crimps 30 and the second set of crimps 32 is made thereby securing the punctured filter plate 20. In a second way, both sets of crimps 30, 32 are made. Afterwards, the punctured filter plate 20 is click fitted in between the crimps 30, 32.

Figure 9 shows an alternative capsule 10'. Features of the capsule 10' which are identical to those of capsule 10 are indicated with the same reference number while features with the same functionality but a different design are indicated by the same reference number with a tilde "'".

The sole difference in the alternative capsule 10' is the presence of a stepped region 16c which has replaced the first set of crimps 30. The stepped region 16c is a region in which the diameter of the sidewall rapidly increases. The punctured filter plate 20 engages this stepped region 16c and is held in place by the second set of crimps 32 located on the other side of the punctured filter plate 20. The punctured filter plate 20 still divides the capsule 10' into two compartments, namely C₁' and C₂, where C₁' has a reduced volume in comparison to capsule 10.

The shape of the sidewall 16 in capsule 10' comprises two stepped regions 16_{c}, 16_{d} thus dividing the sidewall 16 in three sections 16₁', 16₂, 16₃. The sidewall parts 16_{b}, 16_{d}, 16₃ and 16₂ are identical to those of cup-shaped body 10 and will not be described further.

The first sidewall section 16₁' has a height H₁ comprised between 3 and 20 mm. The height H₁ is preferably at least 5 mm, more preferably at least 8 mm, and most preferably at least 9 mm. The height H₁ is preferably at most 15 mm, more preferably at most 12 mm, and most preferably at most 11 mm. In the illustrated embodiment, the height H₁ is about 10 mm.

The first sidewall section 16₁' has an inclination angle α₁ with respect to the central axis 30 of the capsule 10' comprised between 0° and 10°. The inclination angle α₁ is preferably at least 1° and more preferably at least 2°. The inclination angle α₁ is preferably at most 8°, more preferably at most 6°, and most preferably at most 4° mm. In the illustrated embodiment, the inclination angle α₁ is about 3°.

The sidewall 16 has an inner diameter Dᵢ' measured at the end 16a contiguous with the base 14 comprised between 15 and 55 mm. The inner diameter Dᵢ' is preferably at least 25 mm, more preferably at least 30 mm, and most preferably at least 33 mm. The inner diameter Dᵢ' is preferably at most 45 mm, more preferably at most 40 mm, and most preferably at most 37 mm. In the most preferred embodiment (not illustrated), the inner diameter Dᵢ' is about 35 mm.

Although aspects of the present disclosure have been described with respect to specific embodiments, it will be readily appreciated that these aspects may be implemented in other forms within the scope of the invention as defined by the claims.

## Claims

1. A beverage capsule (10; 10') for use in a beverage preparation machine to prepare a beverage by passing a fluid through the beverage capsule, the beverage capsule comprising:
- a cup-shaped body (12) comprising a base (14) and a sidewall (16) contiguous with the base, wherein the base is configured to be pierced by a draining member of the beverage preparation machine to allow draining a beverage from the beverage capsule;
- a lid (22) sealed to the cup-shaped body, the lid and cup-shaped body enclosing an interior volume, wherein the lid is configured to be pierced by an injection member of the beverage preparation machine to inject a fluid into the beverage capsule; and
- a punctured filter plate (20) positioned inside the cup-shaped body and dividing the interior volume into a first compartment (C₂) delimited in part by the lid and configured for holding one or more beverage ingredients (24) and a second compartment (C₁; C₁') delimited in part by the base, wherein the punctured filter plate is located at a distance (H₁) from said base which is larger than or equal to a piercing height of the draining member of the beverage preparation machine and wherein said beverage is able to pass through the punctured filter plate,
wherein the cup-shaped body, the lid and the punctured filter plate are made of a material comprising metal,
**characterized in that** the sidewall is provided with a first set of crimps (30) located adjacent the punctured filter plate with the punctured filter plate being held in place at least in part by the crimps.

2. The beverage capsule according to claim 1, **characterized in that** the beverage capsule further comprises the one or more beverage ingredients, the one or more beverage ingredients being extraction ingredients, such as roasted ground coffee or tea leaves,
wherein, preferably, the one or more beverage ingredients have a particle size distribution determined using optical microscopy according to ISO 13320:2020, wherein at least 90 volume%, and in particular at least 95 volume%, of the one or more beverage ingredients have a particle size of at least 30 µm, in particular at least 40 µm and more particularly at least 50 µm.

3. The beverage capsule according to claim 1 or 2, **characterized in that** the punctured filter plate comprises openings (28) having a size so as to prevent at least 90 volume%, in particular at least 95 volume%, and specifically at least 99 volume%, of the one or more beverage ingredients from passing therethrough.

4. The beverage capsule according to any one of the preceding claims, **characterized in that** the punctured filter plate comprises openings (28) having a smallest dimension which is at most 500 µm, in particular at most 300 µm, more in particular at most 200 µm, and most in particular at most 100 µm,
wherein, preferably, at least some of the openings, and in particular all of the openings, comprise any one of the following shapes: substantially circular and oblong slits, wherein all of the openings more preferably have a same shape.

5. The beverage capsule according to any one of the preceding claims, **characterized in that** the cup-shaped body, the lid and the punctured filter plate are all made of a metal, preferably a food-grade metal, such as aluminium or an aluminium alloy,
wherein, preferably, the cup-shaped body, the lid and the punctured filter plate are all made of a same metal.

6. The beverage capsule according to any one of the preceding claims, **characterized in that** the beverage capsule comprises an annular rim (18) contiguous with the sidewall, the lid being sealed to the annular rim.

7. The beverage capsule according to any one of the claims 1 to 6, **characterized in that** the beverage capsule does not contain a filter paper.

8. The beverage capsule according to any one of the claims 1 to 6, **characterized in that** the sidewall comprises a stepped region (16d) near the lid, the stepped region being configured to attach a filter bag (26) to the sidewall, which filter bag is configured to hold the one or more beverage ingredients.

9. The beverage capsule according to any one of the preceding claims, **characterized in that:**
- each set of crimps is substantially uniformly spread along a circumference of the sidewall; and/or
- the first set of crimps and the second set of crimps are interleaved in a circumferential direction of the sidewall.

10. The beverage capsule according to any one of the preceding claims, **characterized in that** each crimp has:
- a length between 1 mm and 8 mm in a circumferential direction of the sidewall with the length being particularly at least 2 mm and more particularly at least 2,5 mm and with the length being particularly at most 5 mm and more particularly at most 4 mm; and/or
- a height between 0,2 mm and 5 mm in a longitudinal direction of the capsule with the height being particularly at least 0,5 mm and more particularly at least 0,8 mm and with the height being particularly at most 3 mm and more particularly at most 2 mm.

11. The beverage capsule according to any one of the preceding claims, **characterized in that:**
- each set comprises between 2 and 20 crimps and particularly at least 4 crimps or at least 5 crimps and particularly at most 12 crimps or at most 8 crimps; and/or
- each crimp extends over an angle in a circumferential direction of the sidewall of between 5° and 25° degrees, the angle being particularly at least 8° and more particularly at least 10° and with the angle being particularly at most 20° and more particularly at most 15°.

12. The beverage capsule (10) according to any one of the claims 1 to 11, **characterized in that** the sidewall is provided with a second set of crimps (32) which sets are located on opposite sides adjacent the punctured filter plate with the punctured filter plate being held in place by the crimps.

13. The beverage capsule (10') according to any one of the claims 1 to 11, **characterized in that** the sidewall comprises a stepped region (16c), the punctured filter plate engaging the stepped region with the first set of crimps being located on the other side of the punctured filter plate than the stepped region.

14. A method for manufacturing a beverage capsule (10) according to claim 12, the method comprising:
- providing the punctured filter plate (20) and a cup-shaped body preform, which preform comprises the base (14) and a sidewall preform;
- positioning the one or more beverage ingredients (24) in the first compartment (C2); and
- sealing the lid (22) to the cup-shaped body thereby closing the first compartment,
wherein the method further comprises one of:
- crimping the sidewall preform to obtain the first set of crimps (30), placing the punctured filter plate in the cup-shaped body so that it rests on the first set of crimps, and crimping the sidewall preform to obtain the second set of crimps (32) thereby holding the punctured filter plate in place and forming the sidewall (16); and
- crimping the sidewall to obtain the first set of crimps (30) and the second set of crimps (32) and forming the sidewall and click fitting the punctured filter plate in between the sets of crimps.

15. A method for manufacturing a beverage capsule (10') according to claim 13, the method comprising:
- providing the punctured filter plate (20) and a cup-shaped body preform, which preform comprises the base (14) and a sidewall preform, which sidewall preform comprises a stepped region (16c);
- placing the punctured filter plate in the cup-shaped body so that it rests on the stepped region;
- crimping the sidewall preform to obtain the first set of crimps (30) thereby holding the punctured filter plate in place and forming the sidewall (16);
- positioning the one or more beverage ingredients (24) in the first compartment (C2); and
- sealing the lid (22) to the cup-shaped body thereby closing the first compartment.
